# EUROPEAN PATENT SPECIFICATION

(11) **EP 3 717 712 B1**
(45) Date of publication and mention of the grant of the patent: **03.04.2024**
(21) Application number: 18883472.5
(22) Date of filing: 30.11.2018
(51) Int. Cl.: E04B 1/78, E04B 1/94, E04B 2/02, D21C 5/02, D21C 9/02

(54) **METHOD FOR MAKING FIRE RETARDANT MATERIALS AND RELATED PRODUCTS**
VERFAHREN ZUR HERSTELLUNG VON FLAMMHEMMENDEN MATERIALIEN UND VERWANDTE PRODUKTE
PROCÉDÉ DE FABRICATION DE MATÉRIAUX IGNIFUGES ET PRODUITS ASSOCIÉS

(30) Priority: 30.11.2017 US 201762592994 P
(43) Date of publication of application: 07.10.2020
(73) Proprietor: Cleanfiber, LLC, Blasdell, NY 14219 (US)
(72) Inventor: STRIMLING, Jonathan, Grand Island, NY 14072 (US); BRANDSTEIN, Mark, Grand Island, NY 14072 (US); FISCHER, Curtis, Grand Island, NY 14072 (US)
(74) Representative: Engstle, Verena
(86) International application number: PCT/US2018/063244
(87) International publication number: WO 2019/108893

(56) References cited:
- WO-A1-2017/066728
- US-A- 4 552
- US-A- 1 721 594
- US-A- 4 271 115
- US-A- 4 349 413
- US-A1- 2007 137 805
- US-A1- 2011 023 252
- US-A1- 2011 095 245

## Description

### BACKGROUND OF THE INVENTION

### 1. Field of the Invention

The present invention relates to making fire retardant materials. More particularly, the present invention relates to making fire retardant blown-in-place insulation. Still more particularly, the present invention relates to blown-in-place insulation made with cellulosic material treated for fire retardancy.

### 2. Description of the Prior Art

Insulation is widely used for passive thermal control in a broad range of applications, with building insulation being a particularly substantial application. Inorganic fiberglass has been the most common type of material used to make insulation. Fiberglass insulation is provided in blanket and blown fiber form, with the thickness, density, and fiber structure of the blanket or the blown fiber fill determinative of insulative effectiveness, along with the method of installation also impacting effectiveness.

Concerns over the in-situ (installed) effective performance of fiberglass as well as the product's limited fire-retardant characteristics and environmental characteristics, which are regulated under the Federal National Toxicological standards, have raised public and governmental concerns over its continued use as a thermal insulation product. Organic cellulosic insulation has been considered as one type of alternative to fiberglass and can be desirable for that purpose, particularly for its environmental suitability and thermal efficiency. Some cellulosic insulation is made from recycled feedstock, with recycled newsprint being the primary feedstock. Other types of materials, such as cardboard, wood construction debris and the like, have been considered to increase the volume of available feedstock to produce cellulose-based insulation.

Cellulose insulation is made in part using existing papermaking machinery and methods. Specifically, cellulose feedstock in the form of used paper, ordinarily in the form of printed newspaper, is ground, chopped or otherwise mechanically made into small pieces. In order to ensure that the cellulosic insulation conforms to fire retardant standards, the pieces combined with a fire-retardant chemical, which is usually a chemical in powder (i.e., solid) form. The powder must be adhered to the fibers and existing methods of adhering the chemical powder to the fiber, which may include mechanical impingement and/or using an oil to improve adherence have limited effectiveness. Examples of such fire-retardant chemicals include boric acid, borax, ammonium sulfate, monoammonium phosphate, diammonium phosphate, sodium tetraborate, ferrous sulfate, zinc sulfate, magnesium sulfate and mixtures thereof. The treated pieces may then optionally be fiberized, fluffed, or reduced in size to reduce the treated insulation's overall bulk density and improve its suitability for introduction into the structure to be insulated.

The adoption of cellulose insulation as an alternative to fiberglass insulation has been limited for several reasons. First, the cost of fabrication has limited the applications where it is economically competitive. Second, the conventional recycled material used as feedstock is not adequate to produce enough material to meet market demand as a replacement for fiberglass. In addition, the method of converting various types of recycled feedstock can significantly affect the processing cost. Third, the method of joining the fire-retardant material to the cellulose pieces requires the use of a considerable amount of the treatment material. In the case of powdered treatment material, there are challenges in getting the powdered treatment material to adhere to the fibers. There is often an excess of fire retardant material used, which can result in excess dust during installation as well as higher manufacturing costs. When the material is applied at a construction site by installers, a portion of the fire retardants becomes airborne and can become an irritant that can also limit visibility.

Several products and related processes have been described and developed to address the perceived limitations on the manufacture of a viable cellulosic insulation material. US Patent Nos. 5,534,301 and 6,025,027 to Shutt and US Patent Nos. 4,386,119 and 4,454,992 to Draganov describe the use of liquid borate to reduce the amount of borate needed to cover cellulose insulation fibers. However, the processes described in those patents involve the application of the liquid borate to dry fibers. This method is of limited commercial value and may not adequately address the difficulty in joining the fire-retardant chemical to the fibers. In addition, using liquid borates can cause embrittlement and breaking of the fibers, which increases the dustiness of the finished product and can adversely impact the product's density and insulation value. More recently, in US Patent No. 9,045,605, a process is described for reducing the dust associated with the manufacture of a fire-retardant cellulose insulation material in which cellulose material that has been sprayed with liquid fire-retardancy chemicals and dried and then screened so that the end product is less dusty. In the process, individual fibers are separated from each other in a dry state, which causes the undesirable fracture of relatively brittle fibers and the formation of excess dust. In addition, fire-retardant chemicals are contained in downstream dust that is removed from the finished product, and so, valuable fiber and flame retardants are lost to the finished product. That process is costly and less effective at generating a cellulose insulation material with satisfactory fire retardancy than exists with the present invention.

US 2011/095245 A1 discloses a method for making fire retardant fibers comprising the steps of introducing a fiber feedstock to a blend tank, adding a fire retardant chemical to the blend tank, retaining the fiber feedstock and the chemical in the blend tank for a period of time sufficient to retain the chemical on fibers of the fiber feedstock after drying the fibers, drying the fibers of the fiber feedstock to form a chemically treated pulp cake and fluffing the pulp cake to form the fire retardant fibers.

US 2007/137805 A1 describes a process for recovering organic cellulosic fibers from landfill materials such as post consumer, municipal and industrial waste materials comprising the steps of selectively introducing waste materials containing organic cellulosic fibers into a size reduction machine, conveying such pre-cleaned waste material to a tank, drum or tunnel type fiber recovery apparatus and subjecting such waste material for a selected period of time to mechanical and fluid fiberization.

From US 4 349 413 A a process of preparing a fire resistant, cellulosic thermal insulation suitable for blowing into place is known. The process consists of the steps of feeding cellulosic material selected from the group consisting of hard wood chips, soft wood chips, straw, bagasse, and mixtures thereof, into a pressurized chamber, pretreating said cellulosic material with steam under pressure and at an elevated temperature for a period of time sufficient to soften said cellulosic material and moisturize it by steam impregnation. The process further consists of the steps of passing the pretreated material to a fiberizing stage utilizing a refiner and injection a fire retardant chemical selected from the group consisting of borax, boric acid, a borate, and mixtures thereof into said softened material at the eye of the refiner immediately before the grinding segments, fiberizing under pressure for a sufficient period of time to produce an insulation grade cellulosic pulp, and discharging the fiberized material from the fiberizing stage and drying it.

Therefore, what is needed is a method for making fire-retardant cellulosic insulation in a cost competitive way. What is also needed is such a method that can be used with new feedstocks instead of, or in addition to, conventional material (including, for example, corrugated cardboard and recycled newsprint). Further, what is needed is a method to improve the fire-retardant chemical application method for fire-retardant chemical retention on and in the cellulosic material and to minimize inclusion of dust in the final product.

### SUMMARY OF THE INVENTION

The invention is defined by the annexed claims. Embodiments of the invention result from the dependent claims and the below description.

It is an object of the present invention to provide a method for making fire-retardant cellulosic blown-in-place insulation in a cost competitive way. What is also needed is such a method that can be used with new feedstocks instead of, or in addition to, conventional material (including, for example, corrugated cardboard and recycled newsprint). Further, what is needed is a method to improve the fire-retardant chemical application method for fire-retardant chemical retention on and in the cellulosic material and to minimize inclusion of dust in the final product.

These and other objects are achieved with the present invention, which is a method for making fire-retardant cellulosic blown-in-place insulation. The feedstock may be an inorganic material but may also be an organic material, which organic material may be preferable to avoid limitations and possible safety concerns associated with inorganic material. The method is suitable for use in making an insulation product from one or more feedstocks. The one or more feedstocks may include one or more recycled cellulosic feedstock, one or more virgin pulp feedstocks, one or more agricultural fiber sources, and combinations thereof. The amount and type of recycled material and/or virgin material are selectable. Virgin feedstock may be used to make up the amount of pulp required to fill insulation orders dependent upon the availability of recycled material feedstock. Old newsprint (ONP) may be one type of recycled material feedstock. Another suitable type of recycled material feedstock is old corrugated containers (OCC). The invention is not limited to just these two recycled material feedstocks. Additional fiber feedstocks could include sources of agriculturally derived fibers, such as cereal straw, animal feathers, wood byproducts, and other lignocellulosic agricultural byproducts. The invention may include the use of a single feedstock of either type or any other type, provided its characteristics are accounted for in the process of combining it with a fire retardancy chemical. The feedstock is treated for fire retardancy in a mixer that includes a fluid solvent, such as water, but not limited thereto. The ratio of liquid to solids by weight is selectable and may be as low as 20/80 or as high as 99/1.

A system for combining the cellulose feedstock and the chemical treatment includes a chemical treatment source with an input component. The chemical treatment source includes a liquid solution or suspension of treatment material, which may be a combination of a fire retardancy chemical, such as a borate or other suitable compound, at least one solvent such as water, and other optional additives that may be of interest. It is to be understood that an array of suitable fire retardancy chemicals may be employed to treat the cellulosic material. For example, boric acid, borax, ammonium sulfate, monoammonium phosphate, diammonium phosphate, sodium tetraborate, ferrous sulfate, zinc sulfate, magnesium sulfate, and mixtures thereof are suitable. The chemical treatment materials may be dissolved or suspended in the at least one solvent. An aspect of the invention is that the fire retardancy chemical is combined with the feedstock in a liquid form rather than a solid form to provide effective attachment of the fire retardancy chemical to the surface of and into the basic structure of the feedstock component. More specifically, the fire retardant may be allowed to diffuse into external surface of the fibers of the feedstock and/or to diffuse into the core of the fibers.

One or more other additives may be incorporated into the treatment method. For example, a chemical, biological or other additive may be used to eliminate or reduce one or more components of the feedstock that may result in a product with undesirable characteristics. For example, a cellulosic feedstock that is a recycled material may include one or more bonding agents comprising polysaccharides, starches and the like that, if carried through to the end product, may facilitate mold growth. An additive such as an enzyme or other component to break down such undesirable components, and/or make them sufficiently fluidized and/or separated that they can be removed from the treated feedstock, may be added to the blend tank as an aspect of the present invention. A biocide may be added to minimize mold growth.

The chemical treatment source is combined with the plurality of fibers at one or more selectable stages of the cellulose insulation fabrication method prior to final drying of the cellulose material. For example, the input component for the chemical treatment source may be coupled to the blend tank for introduction of the chemical treatment at that point of the method, when the fibers are suspended in a mostly liquid state. However, it is to be understood that the input component for the chemical treatment source may be located elsewhere, including other system component locations provided it is in liquid form when in contact with the cellulose feedstock. Examples of alternative processing steps include the application of a liquid fire retardant in the mixing stage (after partial dewatering) and/or spraying of dried paper with a liquid fire retardant. In addition, dry chemical treatment materials (such as powders) may be subsequently applied to materials that are treated with liquid fire retardants, for specific properties or chemistries that may be advantageously applied in a dry state to a moist surface.

The system of the present invention further includes conventional components including, but not limited to, one or more wet separation devices (including wet classification devices), dewatering devices, one or more water recovery and return devices, optional fiber dye and/or bleaching devices, one or more dryers, dust collectors, coolers, fluffers, fiberizers, dry classifiers, product collectors and all conduits required to transfer material among the devices of the system. The system may be substantially incorporated into a conventional pulp and fiber manufacturing process of the type typically used in the papermaking industry, for example, rather than as a completely distinct or an extensive add-on to a conventional process. Examples of devices of the system will be described herein, a number of which exist in the conventional pulp/paper processing facilities that currently exist.

The system includes a mechanism for separating fibers from one another prior to treatment with a fire retardant. Conventional pulping and screening systems from the paper processing industry may be utilized to separate fibers. The purpose of this step is to gently break down woven or formed fiber structures (such as paper) to unwind, decouple and free individual fibers. This may occur with the fiber while in a slurry state, where a liquid such as water is used as a medium to convey the fiber.

The system may also include one or more partitioning devices for separating the material stream into various component streams with different properties. For example, one partitioning device may separate heavy components like metals and glass from fiber; another partitioning device may separate longer fibers from shorter fibers. Partitioning devices that separate types of fiber from each other will also be referred to herein as classifiers. Cyclonic devices may be used for removing heavy elements from the fiber stream. Fiber screening devices may also or alternatively be utilized to partition fibers by fiber size. The partitioning system may include means to remove plastics and other products that may float when the fibers are suspended in a slurry.

The system and related method of the present invention provide an effective and cost competitive way to manufacture a viable cellulose blown-in-place insulation product. The method can be used to make other sorts of products that are fiber-based and that require treatment to establish desired characteristics. The separation of the fibers and the partitioning and/or classification of the fibers in a wet state avoids breakage of fibers, when compared with conventional dry processing. The introduction of the chemical treatment to the pulp prior to fiber drying yields a reduction in chemical treatment costs and overall insulation processing costs. The system and method provide for the option to use only recycled cellulosic material as feedstock or a combination of such feedstock with other materials to ensure an adequate and sustainable supply of feedstock. The system and method also include the introduction of the fire-retardancy chemical treatment prior to a final drying stage of the manufacturing process. This results in a more effective attachment or impregnations of the fire-retardant chemical with the insulation fibers while also reducing the amount of treatment to be used to produce effective fire retardancy.

The present invention enables the manufacture of fire-retardant blown-in-place insulation materials. The feedstock used to make the fire-retardant insulation material may be of any type not limited to specific paper, pulp, container or other form of material. The invention provides for the combining of a fire retardancy chemical with the feedstock prior to drying of the combination. The fire retardancy chemical is in liquid form when combined with the feedstock. The fire retardancy chemical may be combined with the at least one solvent to be in liquid form before contacting the fibers. The fire retardancy chemical may be in a dry form and combined with the fibers and then introduced to the at least one solvent to be in liquid form. The fire retardancy chemical may be in a dry form and be combined with moist fibers so that it is effectively dissolved by the solvent in the fibers when contacting the fibers. The combination of fire retardancy chemical and the feedstock may be further processed to form a web, a sheet, a plurality of fibers, or other suitable form. The feedstock and fire retardancy combination may be further processed to make insulation, as noted, or other end products wherein fire retardancy is a desirable feature.

The present invention separates fibers from one another while wet prior to fire retardancy treatment. By separating the fibers when wet, there is less breakage of the fibers versus when that separation occurs while the fibers are dry, which has been the process until the present invention. This reduces dust formation and improves yield. When the fibers are optionally partitioned and/or classified while wet, there is also less breakage of the fibers as compared to when such partitioning of the fiber stream is carried out while the fibers are dry. This also reduces dust formation.

Fibers that have been separated and/or partitioned in a wet state may be mixed in a moist or wet state with fibers obtained from other sources. For example, fibers from various feedstock sources may be mixed together in the wet state or other fibers may be mixed in dry. As another example, recycled paper materials may be mixed with agricultural fibers and/or animal feathers. In addition, dust or smaller fiber fragments recovered from other stages of the production process may be mixed with separated classified fibers from earlier stages of processing. The mixture of various fiber sources and long and shorter fibers can aid in the formation of the desired fiber superstructures that may optionally be created later in this process. Those superstructures may represent the agglomeration of fiber pieces that are otherwise too small to act as effective insulation. The agglomeration of fiber pieces may also be useful to reduce dust in the finished product, to improve the insulation properties of the finished product and/or to favorably impact the density of the finished product.

The fibers are at least partially dewatered prior to combining them with fire retardancy chemicals. In this embodiment of the present invention, there is no need for a large volume of recirculating chemical at the pulping stage, and the same pulp material (without fire retardant yet applied) can be diverted for other applications that do not require fire retardancy. For example, the same pulping system can be used to produce both cellulose insulation and linerboard, with a partitioning system used to separate the two fiber streams. The water from the linerboard system may be recirculated (without fire resistant chemicals) while the fiber stream intended for cellulose insulation is partially dewatered before the addition of chemicals. This eliminates the risks and complexity of recirculating fire resistant chemistries in larger linerboard operations. These advantages are in addition to those known when combining the fibers and fire retardancy chemicals in liquid form, including less chemical required and less dust generated on the fiber surface. Further, fire retardancy in liquid form is more effective at getting the treatment into the fibers.

These and other advantages of the invention will become more apparent upon review of the following detailed description, the accompanying drawings and the appended claims.

### BRIEF DESCRIPTION OF THE DRAWING

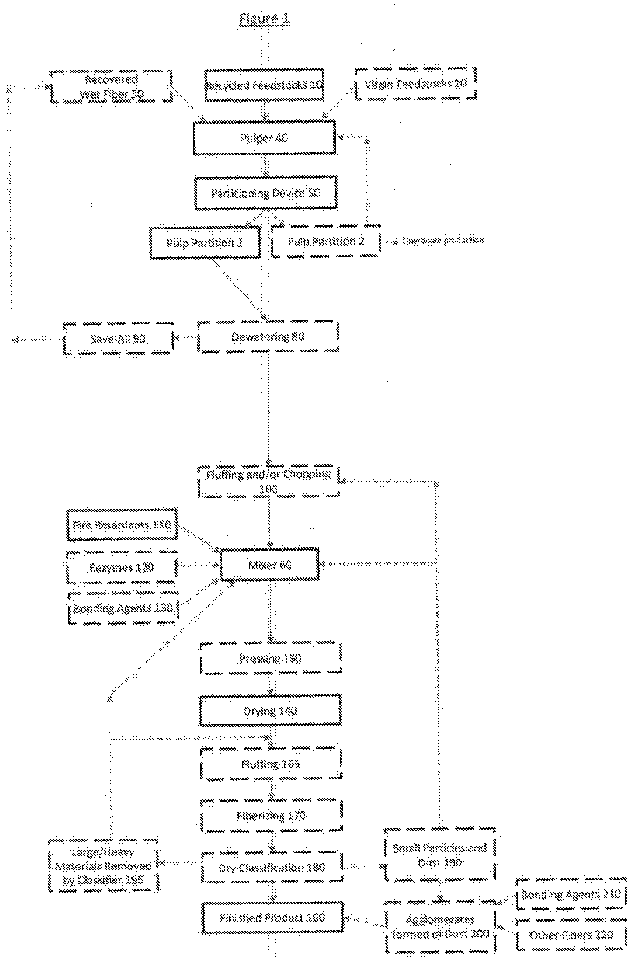

FIG. 1 is a simplified block diagram representation of the method stages and the system components associated with the manufacture of the cellulose blown-in-place insulation of the present invention. Dashed lines represent optional features, components and steps.

### DETAILED DESCRIPTION OF EMBODIMENTS OF THE INVENTION

While the following description is directed to the embodiment of the invention wherein an organic cellulosic blown-in-place insulation is made, it is to be understood that the invention is not limited thereto. Instead, the present invention provides a method to produce a cellulose-based blown-in-place insulation having adequate fire retardancy using one or more recycled cellulose-based feedstock material in a cost-effective way. Additionally, the present invention provides for the fabrication of such a product while reducing the inclusion of dust material in the finished product. The steps of the method as described may be done in different orders without deviating from the scope of the invention including, but not limited to, the order in which components are added to a mixer.

Referring generally to FIG. 1, a cellulose insulation of the present invention is created when cellulose-based feedstock material that may otherwise be waste material, referred to herein as recycled feedstock material 10, and/or other feedstock materials is/are combined with one or more fire retardancy chemical compounds to produce a fire-retardant cellulose blown-in-place insulation product. The one or more feedstock materials are reduced to fiber form prior to or in conjunction with combining with the one or more fire retardancy compounds in a liquid environment. The recycled feedstock material 10, along with optional virgin feedstock 20 and/or recovered wet fibers 30 are transferred to a fiber generating apparatus such as a pulper 40, for example. Other means for generating fibers from the feedstock are known to those skilled in the art, and may also include recovering dry fiber streams from downstream processes.

A pulper 40 may be utilized to separate fibers from one another. The agitation of fibers in the presence of a liquid such as water can be an effective means of separating the fibers to an extent. Pulp generated in the pulper 40 may be transferred to a partitioning device 50 to remove contaminants and/or to classify separated moist fibers before introducing the fibers to a mixer 60. The partitioning device 50 may be a wet classification system, such as a screening system that separates fibers by fiber size. The partitioning device 50 may also be a cyclonic separator that separates heavy materials from lighter materials. The partitioning device 50 may also have multiple stages and multiple functions, such as combinations of cyclonic separators and screening systems, with the goal of separating fibers desired for one use from fibers desired for a different use and/or separating out waste materials.

All the separated fibers may be transferred to the mixer 60 or a portion may be transferred to the mixer 60 while the remainder are diverted to another application, such as the fabrication of linerboard, for example. The separated fibers are dewatered, at least partially, in dewatering apparatus 80 prior to introduction to the mixer 60, with effluent from the dewatering apparatus 80 transferred to a "save-all" tank 90 for the return of recovered wet fiber 30 to the pulper 40. The at least partially dewatered separated fibers or the separated fibers that have not been dewatered are transferred directly to the mixer 60 or they may optionally be fluffed and/or chopped in apparatus 100 prior to introduction to the mixer 60. In addition, it is possible that the fibers are agitated within the mixer 60 by chopper blades or other mechanical action that may serve to further separate the fibers while still moist or wet. The fundamental function of the chopper 100 is to separate the fibers in a wet state so that they are not clumped together but are predominantly separated. While the fibers may have been originally separated in an upstream pulping process, the process of dewatering under pressure can have the effect of binding fibers together, and the chopper 100 can be useful in re-separating the fibers from one another. Because the chopper 100 operates on fibers still in the wet state, breakage of the fibers is again minimized. If superstructures of fibers are present while material is being chopped, the chopper 100 may be tuned to maintain the integrity of a specific scale of superstructures, while separating other larger clumps, for example.

The separated fibers are mixed in the mixer 60 with one or more fire retardancy chemical compounds 110 and one or more solvents. The one or more solvents may be water, another liquid, or a combination of water and another liquid. The solvent may either be added to the mixer 60 or it may come with the separated fibers in the transfer from any one of the pulper 40, the partitioning device 50, the dewatering apparatus 80 and the fluffer/chopper apparatus 100. The one or more fire retardancy chemical compounds may be added to the mixer 60 before, during or after introducing the separated fibers to the mixer 60. Optionally, one or more additives 120 may be added to the mixer 60 before, during or after introducing the separated fibers to the mixer 60. The one or more additives 120 may be used to enhance the characteristics of the separated fibers to improve fire retardancy chemical attachment on and in the fibers. For example, the additives may include one or more enzymes suitable to remove residual adhesive from the recycled feedstock material 10. One or more bonding agents 130 may also be added to the mixer 60 before, during or after introducing the separated fibers to the mixer 60. The one or more bonding agents 130 may be selected to cause individual fibers to clump together and remain joined together. The bonding agents may be added at the mixer 60 or may be applied in downstream processes and may cause the joining to occur in the mixer 60 or at a downstream stage, such as during drying. The bonding between fibers may form fiber superstructures with interstices between the fibers that improve the insulative characteristics of the finished product.

The separated fibers, the one or more fire retardancy chemical compounds 110, and any optional additives and/or bonding agents contained in the mixer 60 are mixed together for a sufficient amount of time for the fire retardancy chemical compounds to be retained on and in the separated fibers, and to enable sufficient fiber bonding to occur before completion of processing if it is a goal to form fiber superstructures in the mixer 60. Treated fibers exiting the mixer 60 are transferred to a drying apparatus 140 to be dried to a liquid content in the range of about 5% to about 25% by weight. Optionally, the treated fibers may first be pressed in a pressing apparatus 150. The pressing apparatus 150 may have the function of removing water, helping to form a plurality of superstructures, or both functions. Optionally, the treated and dried fibers may be fiberized in fiberizer 170. The treated and dried fibers may further optionally be classified in dry classifier 180, either directly from the drying apparatus 140 or from the optional fiberizer 170. The purpose of the dry classifier 180 is to ensure that the properties of the finished product meet the targeted characteristics for size, density and/or hydrodynamic diameter. The dry classifier may provide as outputs both the desired product and non-conforming materials, which may include dust (smaller than desired particles) or larger clumps (heavier than desired materials). Following optional classification, a selected subset of treated and dried fibers may then in satisfactory form to be packaged for use as a finished end product 160.

When the optional dry classifier 180 is employed, non-conforming materials such as small particles and dust 190, or large and heavy materials 195, may be removed from treated and dried fibers that comprise the desired product and returned to the mixer or to another stage of the process. Dust may be returned for agglomeration when the one or more bonding agents 130 are in the mixer 60 and/or the small particles and dust 190 may be returned to one or more other apparatuses for reconstitution as fiber superstructure components of the finished end product 160. The small particles and dust 190 may optionally be diverted to an agglomeration apparatus 200, which may simply be a dry mixer, for combining with one or more supplemental bonding agents 210 and/or other supplemental fibers 220 to form additional residual fiber superstructures that may be added to the treated and dried fibers as the end product 160.

The recycled feedstock material 10 may be comprised of one or more recyclable materials that are cellulose-based, including, but not limited to any plant-based materials. Additional fiber feedstocks suitable for use in the invention include sources of agriculturally derived fibers, such as cereal straw, animal feathers, and other lignocellulosic agricultural byproducts, for example. The virgin feedstock material 20 may be from a kraft or a groundwood (stone or thermo-mechanical). The ratio of recycled material 10 to virgin material 20 and/or recovered wet fibers 30 is selectable when the combination is used. The feedstock material(s) may be added to the partitioning device 50 at a level of 1% to 30% solids by weight.

As noted, the virgin feedstock material 20 can be hardwood (1.5mm), softwood (3.5mm) (kraft process) or groundwood (<1 mm) (includes stone, thermo-mechanical process), and/or cellulose pulp fibers, which may be diverted from a conventional cellulose processing system prior to bleaching, or immediately afterward if that is of interest. Pulp coming off the last black liquor washer in a kraft process, for example, before going into the bleaching process (20% solid by weight) can be used. A pump may be used to move pulped fibers from the pulper 40 to the partitioning device 50. Those of skill in the art will recognize that any sort of material transfer mechanism may be used to move material including, but not limited to, pulped material from one location to another for the process of the present invention.

Recycled newsprint pulp may be obtained from a conventional paper recycle process, such as from ONP #8 and #9 sources, for example. The paper can be introduced into the pulper 40. The pulper 40 is a tank that has an agitator and a source of solvent, such as water, to pulp the feedstock. The agitation breaks down the cellulosic material into fiber stalks. The one or more fire retardants 110 may be delivered to the mixer 60 in liquid form, such as by being dissolved in a solvent such as water. The fire retardants 110 when combined with fibers in a liquid environment are better adhered to the surface of and absorbed into the structure of the separated fibers than when dry fire retardancy chemicals are used and when liquid fire retardancy chemicals are simply sprayed onto feedstock rather than separated fibers. The fire retardant can be in a dry or a wet form combined with fiber in wet form or it can be combined in dry or wet form with fibers and the one or more solvents. The one or more fire retardants may be selected from boric acid, borax, ammonium sulfate, monoammonium phosphate, diammonium phosphate, sodium tetraborate, ferrous sulfate, magnesium sulfate, zinc sulfate and mixtures thereof. An example of a suitable fire retardancy chemical composition is described in US Patent No. 8,043,384.

The chemical saturation, operating temperature, and dwell time in the mixer 60 is selectable to ensure that the finished cellulose insulation contains a sufficient amount of fire-retardancy material adhered in and to the fibers of the insulation. The one or more other additives may be used to hydrolyze starch, polysaccharide, or other undesirable materials, for example, as well as one or more biocides, as desired to minimize mold growth in the end product 160. The chemicals, additives and/or bonding agents may be mixed together before transfer to the mixer 60 such as with a mixing valve, or they may be transferred separately to the mixer 60.

The dewatering apparatus 80 is selected from any number of existing systems that take a cellulose pulp slurry and remove water to a desired solids content. Any type of screw press, twin wire press, vacuum filter, plate and frame press, roll press, or centrifugal drum, for example, can be used as the dewatering apparatus 80. The dewatering system 80 may increase the solids content of the slurry containing the treated fibers to about 30% or more but not limited thereto.

A pump or other form of material transfer mechanism can be used to transfer dewater effluent to the save-all 90, which separates fibers from fluid. This can be accomplished by a flotation, rotary (vacuum filters) or wire (fabric) system that can efficiently remove the fluid. The fibers from the save-all are moved to the recovered wet fiber container 30. Excess fluid from the save-all 90 can be filtered for use in other process components of the system or put into a waste treatment process for removal.

The optional fluffer/chopper 100 is configured to break up a pulp cake of treated fibers or dewatered treated fibers. The fluffer/chopper 100 can be two counter rotating meshed blades with a discharge to the drying system 140. Any number of fluffers can be used to break up the pulp cake. The pulp cake can be broken up ahead of the mixer 60 or internally within the mixer 60 by blades internal to the mixer that may be designed to separate fibers.

The drying system 140 is used to dry the treated fibers down to a desired moisture content, which may range from 8-25% in moisture content (75-92% solids), for example, but not limited thereto. A dryer, such as but not limited to a rotary drum dryer or flash dryer system that breaks up and fluffs the pulp while drying may be advantageous, but other drying systems such as microwave dryers and conveyorized dryers may also be employed. A belt conveyor, auger system or other form of conveyance device may be used to transport the dried and chemically treated fibers to a location for cooling. An exhaust gas/hot air collection system from the dryer system may be employed to take moist air and recirculate it back through the drying system 140 to capture residual heat before exhausting to the atmosphere.

An optional dry fluffer 165 may be used to separate clumps of materials that may have formed in the drying process, while minimally affecting the basic structure of the fibers and while retaining desired fiber superstructures when such superstructures form part of the end product. Alternatively, an optional fiberizer 170 may be used as a more aggressive measure to further refine the treated and dried fibers, by further separating and reducing the size of the fibers after the drying process. Those separated fibers and/or fiber superstructures may optionally be further classified by size using the dry classifier 180. The dry fluffer 165 and the fiberizer 170 can be mechanical devices with rotating toothed plates in close proximity to one or more sets of static or counter rotating toothed plates such that when clumps of fibers are conveyed through the device 165/170 they are subjected to shear forces which separate the fibers. The distinction between a fluffer and a fiberizer is in the severity of their interaction with the materials, with a fluffer more gently separating groups or clumps of fibers and a fiberizer more aggressively impacting the materials with greater shear (and focused on separating individual fibers). A hammer mill is an example of a fiberizer, but there are also fiberizers formed with one or more rotating toothed plates in close proximity to one or more stationary or counterrotating toothed plates. Traditional fiberizers used to make cellulose insulation with dry fire retardants mix the chemical and fiber in a high velocity grinding motion, which can have the effect of pressing chemicals onto the fibers and creating adhesion. While this process can be used to meet regulatory requirements, the dust can come off during installation, creating a dusty work environment and impeding visibility. The method of the present invention takes the treated fibers with the absorbed chemicals and dries them as individual fibers or clumped together into desired superstructures. Because the fire retardant is inside the fibers, the present invention dramatically reduces the amount of chemical dust produced during installation.

The optional chopper 100 may be used instead of the optional fiberizer 170 but it is used prior to drying the treated fibers. In that way, dust formation is reduced as compared to when the fiberizer 170 is used after drying. The use of the chopper 100 breaks up the clumps in a way that is different from the fiberizing and post-drying separation described. Specifically, because the fibers are moist, they are more pliable and less susceptible to breakage. Further, fibers may be combined with one or more binders to form superstructures before chopping. The binder may be a chemical additive suitable for joining fibers together, and a suitable binder may be a starch, adhesive, or other binder. These superstructures may have spaced bonds between fibers and/or fiber particulates that establish voids for improving insulative and density characteristics and those bonds may be formed directly or through use of an optional binder. The use of the chopper 100 instead of the fiberizer 170 can improve the likelihood of maintaining superstructure integrity because the fibers are more pliable and less fragile in a moist or wet state.

Treated and dried fibers may optionally be sent for testing. Testing may be performed on the fibrous material that is the cellulose insulation of the present invention for compliance with all regulations concerning blown-in cellulosic fiber insulation as directed by the C-739, HH I515, and the Consumer Product Safety Council. The treated fibers made using the method of the present invention can be used as a fire retardant, thermal, sound and radiant barrier material for insulating.

In addition to being used to separate fibers with differing characteristics, the partitioning device 50 can also separate contaminants from the fibers of the feedstocks. These contaminants of the recycled feedstock material 10 may include glass, plastic or other non-cellulose elements, for example. The partitioning device 50 may be comprised of a screening system, or a cyclonic separator, which are two examples of partitioning technologies that may be applicable. The partitioning device 50 may additionally include or instead be a screening apparatus such as the type shown at:
https://www.andritz.com/products-en/group/pulp-and-paper/pulp-production/kraft-pulp/pulp-drying-finishing/pulp-screening-cleaning, for example, to facilitate fiber classification prior to introducing the feedstock material into the mixer 60.

The optional dry classifier 180 may be used to separate by size treated and dried fibers so that relatively small particulates that are effectively dust particles are removed from the product to minimize dust inclusion in the finished product. The dry classifier 180 may be a screening apparatus or an air classifier. An air classifier may use an upward airflow to separate lighter elements from heavier elements, for example. The dry classifier 180 may operate to separate fibers based on size, density, hydrodynamic diameter or other characteristics proven to separate high performing product from less desirable fractions of the product.

Examples of the product of the present invention were made using the method of the present invention as described herein. Fibers separated via a pulping process and classified using a classification system were treated with fire resistant chemicals, mixed with other fiber sources and dried to produce finished product. The finished product was tested against ASTM C739 and found to be fully compliant. The product was provided to installers in the field and found to be a high quality finished product that was low in dust.

## Claims

1. A method for making a fire-retardant blown-in-place insulation comprising the steps of:
introducing fibers of one or more feedstocks to a mixer (60);
introducing one or more solvents to the mixer (60);
introducing one or more fire-retardant chemicals (110) to the mixer (60);
mixing the fibers, the one or more solvents and the one or more fire-retardant chemicals (110) in the mixer (60) long enough to retain the one or more fire-retardant chemicals (110) on and within the fibers to form treated fibers; and
drying the treated fibers to form the fire-retardant blown-in-place insulation **characterized by**
partially dewatering the fibers of the one or more feedstocks before introducing the fibers to the mixer (60); and
separating in a moist state, the partially dewatered fibers at some point after partially dewatering the fibers.

2. The method of claim 1, wherein the step of separating includes the step of classifying the separated moist fibers (30) prior to introducing the separated fibers to the mixer (60).

3. The method of claim 1 further comprising the step of recovering residual fiber dust (190) from the separated fibers before introducing the separated fibers to the mixer (60).

4. The method of claim 1 further comprising the step of removing residual fiber dust (190) from the separated fibers before introducing the separated fibers to the mixer (60).

5. The method of claim 1 further comprising the step of removing residual fiber dust (190) from the treated fibers after the step of drying.

6. The method of claim 1, wherein the feedstock includes one or more recycled material feedstocks (10) and/or wherein the one or more feedstocks includes one or more of cereal straw, animal feathers, and other lignocellulosic agricultural byproducts.

7. The method of claim 1 further comprising the step of adding one or more additives to the mixer (60) before or during the mixing step.

8. The method of claim 1 further comprising the step of classifying the treated fibers after the step of drying.

9. The method of claim 1 further comprising the step of recovering residual fiber dust (190) from the treated fibers after the step of drying.

10. The method of claim 1 further comprising the step of combining portions of residual fiber dust (190) together to form treated fiber superstructures, in particular wherein the step of combining portions of residual fiber dust together includes combining the residual fiber dust (190) with a binder.

## Patentansprüche

1. Verfahren zur Herstellung einer feuerhemmenden Einblasdämmung, das die folgenden Schritte umfasst:
Einbringen von Fasern aus einem oder mehreren Ausgangsmaterialien in einen Mischer (60);
Einbringen eines oder mehrerer Lösungsmittel in den Mischer (60);
Einbringen einer oder mehrerer feuerhemmender Chemikalien (110) in den Mischer (60);
Mischen der Fasern, des einen oder der mehreren Lösungsmittel und der einen oder der mehreren feuerhemmenden Chemikalien (110) in dem Mischer (60) lange genug, um die eine oder die mehreren feuerhemmenden Chemikalien (110) auf und in den Fasern zu binden, um behandelte Fasern zu bilden; und
Trocknen der behandelten Fasern zur Herstellung der feuerhemmenden Einblasdämmung
**gekennzeichnet durch**
teilweises Entwässern der Fasern des einen oder der mehreren Ausgangsmaterialien vor dem Einbringen der Fasern in den Mischer (60); und
Trennen der teilentwässerten Fasern in feuchtem Zustand zu einem bestimmten Zeitpunkt nach der Teilentwässerung der Fasern.

2. Verfahren nach Anspruch 1, wobei der Schritt des Trennens den Schritt des Klassifizierens der getrennten feuchten Fasern (30) vor dem Einbringen der getrennten Fasern in den Mischer (60) umfasst.

3. Verfahren nach Anspruch 1, das ferner den Schritt der Rückgewinnung von restlichem Faserstaub (190) aus den getrennten Fasern vor dem Einbringen der getrennten Fasern in den Mischer (60) umfasst.

4. Verfahren nach Anspruch 1, das ferner den Schritt des Entfernens von restlichem Faserstaub (190) von den getrennten Fasern vor dem Einbringen der getrennten Fasern in den Mischer (60) umfasst.

5. Verfahren nach Anspruch 1, das ferner den Schritt des Entfernens von restlichem Faserstaub (190) von den behandelten Fasern nach dem Trocknungsschritt umfasst.

6. Verfahren nach Anspruch 1, wobei das Ausgangsmaterial ein oder mehrere recycelte Ausgangsmaterialien (10) enthält und/oder wobei das eine oder die mehreren Ausgangsmaterialien Getreidestroh, Tierfedern und/oder andere lignozellulosehaltige landwirtschaftliche Nebenprodukte enthält.

7. Verfahren nach Anspruch 1, bei dem dem Mischer (60) vor oder während des Mischvorgangs ein oder mehrere Zusatzstoffe zugesetzt werden.

8. Verfahren nach Anspruch 1, das ferner den Schritt der Klassifizierung der behandelten Fasern nach dem Trocknungsschritt umfasst.

9. Verfahren nach Anspruch 1, das ferner den Schritt der Rückgewinnung von restlichem Faserstaub (190) aus den behandelten Fasern nach dem Trocknungsschritt umfasst.

10. Verfahren nach Anspruch 1, das ferner den Schritt des Kombinierens von Teilen von restlichem Faserstaub (190) zur Bildung von behandelten Faserverbundwerkstoffen umfasst, wobei der Schritt des Kombinierens von Teilen von restlichem Faserstaub insbesondere das Kombinierens des restlichen Faserstaubs (190) mit einem Bindemittel umfasst.

## Revendications

1. Méthode de fabrication d'un isolant ignifuge soufflé sur place comprenant les étapes suivantes :
introduire des fibres d'une ou plusieurs matières premières dans un mélangeur (60);
introduire un ou plusieurs solvants dans le mélangeur (60);
introduire un ou plusieurs produits chimiques ignifuges (110) dans le mélangeur (60);
mélanger les fibres, le ou les solvants et le ou les produits chimiques ignifuges (110) dans le mélangeur (60) suffisamment longtemps pour retenir le ou les produits chimiques ignifuges (110) sur et dans les fibres afin de former des fibres traitées; et
le séchage des fibres traitées pour former l'isolant ignifuge soufflé en place **caractérisé par**
déshydrater partiellement les fibres d'une ou de plusieurs matières premières avant d'introduire les fibres dans le mélangeur (60); et
séparer à l'état humide les fibres partiellement déshydratées à un moment donné après la déshydratation partielle des fibres.

2. La méthode de la revendication 1 dans laquelle l'étape de séparation comprend l'étape de classification des fibres humides séparées (30) avant d'introduire les fibres séparées dans le mélangeur (60).

3. La méthode de la revendication 1, comprenant en outre l'étape de récupération de la poussière de fibre résiduelle (190) des fibres séparées avant d'introduire les fibres séparées dans le mélangeur (60).

4. La méthode de la revendication 1, comprenant en outre l'étape d'élimination de la poussière de fibre résiduelle (190) des fibres séparées avant d'introduire les fibres séparées dans le mélangeur (60).

5. La méthode de la revendication 1, comprenant en outre l'étape d'élimination de la poussière de fibre résiduelle (190) des fibres traitées après l'étape de séchage.

6. La méthode de la revendication 1 dans laquelle la matière première comprend une ou plusieurs matières premières recyclées (10) et/ou dans laquelle la ou les matières premières comprennent une ou plusieurs pailles de céréales, des plumes d'animaux et d'autres sous-produits agricoles lignocellulosiques.

7. La méthode de la revendication 1, comprenant en outre l'étape consistant à ajouter un ou plusieurs additifs au mélangeur (60) avant ou pendant l'étape de mélange.

8. La méthode de la revendication 1, comprenant en outre l'étape de classification des fibres traitées après l'étape de séchage.

9. La méthode de la revendication 1, comprenant en outre l'étape de récupération de la poussière de fibre résiduelle (190) des fibres traitées après l'étape de séchage.

10. La méthode de la revendication 1, comprenant en outre l'étape consistant à combiner des portions de poussières de fibres résiduelles (190) pour former des superstructures de fibres traitées, en particulier dans laquelle l'étape consistant à combiner des portions de poussières de fibres résiduelles comprend la combinaison des poussières de fibres résiduelles (190) avec un liant.
